# EUROPEAN PATENT SPECIFICATION

(11) **EP 0 691 380 B1**
(45) Date of publication and mention of the grant of the patent: **01.09.1999**
(21) Application number: 95304467.4
(22) Date of filing: 26.06.1995
(51) Int. Cl.: C08L 79/08, C08L 33/14

(54) **Impact modified polyetherimide resins**
Schlagzäh modifizierte Polyetherimidharze
Résines de polyétherimide modifiées aux chocs

(30) Priority: 05.07.1994 US 270607
(43) Date of publication of application: 10.01.1996
(73) Proprietor: GENERAL ELECTRIC COMPANY, Schenectady, NY 12345 (US)
(72) Inventor: Cooper, Stephen Michael, Newburgh, IN 47711 (US); Nazareth, Darryl, Evansville, Indiana 47715 (US); Greenberg, Ronald Alan, Evansville, Indiana 47715 (US)
(74) Representative: Szary, Anne Catherine, Dr.

(56) References cited:
- WO-A-84/03895
- PATENT ABSTRACTS OF JAPAN vol. 14 no. 202 (C-713) [4145] ,25 April 1990 & JP-A-02 041355 (MITSUBISHI RAYON CO. LTD.)
- PATENT ABSTRACTS OF JAPAN vol. 17 no. 567 (C-1120) [6196] ,14 October 1993 & JP-A-05 163433 (NIPPON G II PLST K.K.)
- PATENT ABSTRACTS OF JAPAN vol. 9 no. 36 (C-266) [1759] ,15 February 1985 & JP-A-59 182847 (SUMITOMO KAGKU KOGYO K.K.)

## Description

### BACKGROUND OF THE INVENTION

This invention is directed to a particular impact modified polyetherimide resin using a particular diamine synthesized polyetherimide resin and an impact modifier which is a particular epoxy copolymer. The compositions of this invention when injection molded into molded articles have dramatic increases in impact properties without sacrificing thermal properties.

Polyetherimides are a well known class of thermoplastic polymers having numerous applications, particularly in the injection molding area. They are generally high performance polymers having excellent properties. However, one of the drawbacks in the application of polyetherimide polymers or resins is their resistance to impact. Molded articles made from the polyetherimide resins are somewhat brittle. Therefore, it would be desirable to increase the impact resistance of polyetherimide resins without sacrificing the other excellent properties of polyetherimide resins. By improving the impact resistance of the polyetherimide resins, a greater number of applications would then become available for polyetherimide resins. Polyetherimide resins are sold by General Electric Company, Mount Vernon, Indiana, under the trademark ULTEM® resins.

It is also known to impact modify polyetherimide resins using an olefinic glycidyl-methacrylate copolymer as taught by Sumitomo Chemical KK Japanese Patent Application filed March 31, 1983 and published October 17, 1984, as J59182847-A. However, the inventors did not appreciate or recognize the unexpected dramatic increases in impact strength that are achieved with a particular diamine synthesized polyetherimide resin over other diamine synthesized polyetherimide resins when employing the particular epoxy copolymer impact modifier.

WO 84/03895 discloses blends of a polyetherimide and a minor amount of an acrylate copolymer of C₁-C₅ acrylate and C₁-C₅ methacrylate having a higher impact strength than that associated with the polyetherimide component of the blends. In addition, the blends exhibit improved extrusion and molding performance characteristics over those of the polyetherimide component of the blend when molded alone.

JP-A-5163433 discloses a process for the production of coloured polyetherimide resin having good impact resistance and colorability. A masterbatch is prepared by blending polyetherimide with a polycarbonate or other compatible resin and an inorganic pigment. The masterbatch is then blended with an olefin copolymer of an α,β-unsaturated glycidyl ester and an olefin.

In accordance with the present invention, novel polymer blend compositions are prepared containing a particular polyetherimide resin and a particular impact modifier which is an olefinic copolymer. When the composition is in the molded state, it has dramatic improved impact resistance over other polyetherimide resins. The amount of olefinic copolymer employed herein is that amount which improves impact resistance but is preferably present in an amount ranging from about 5 to about 50 weight percent based on the weight of polyetherimide resin and olefinic copolymer and more particularly 5 to about 25 weight percent thereof. In addition to enhanced impact properties, the polymer blends of this invention exhibit good retention of the other excellent thermal properties of the polyether polyetherimide resin.

### DETAILED DESCRIPTION OF THE INVENTION

The polyetherimide resins employed in the practice of this invention are commercially available resins whose preparation and properties are described in U.S. Patent 3,803,085 and 3,905,942.

The particular polyetherimides employed in this invention consist essentially of repeating units of the formula: 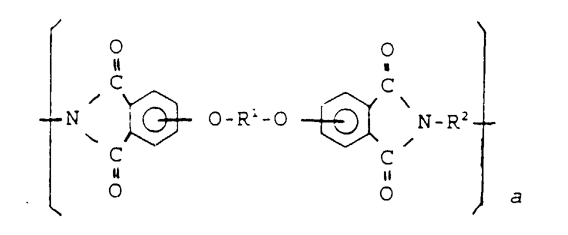 wherein *a* is an integer of from 10 to 500; R² is paraphenylene and R¹ is the divalent moiety of the formula:

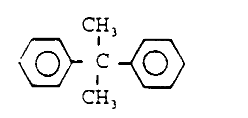

The polyetherimide of this invention can be prepared by well-known polyetherimide producing processes. In general, the polymers are prepared by reacting an aromatic bis(ether anhydride) of the formula: 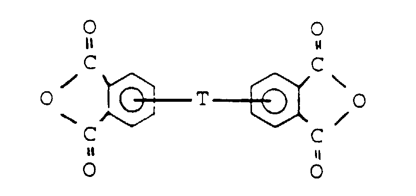 with paraphenylene diamine of the formula:

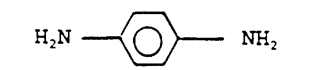

In the above formula T is -O-, 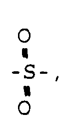 or a group of the formula:

- O - Z - O -

wherein the divalent bonds of the above -O-, 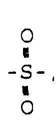 or the -O-Z-O- group are in the 3,3', 3,4', 4,3', or 4,4' positions; Z is a member of the class consisting of (A): 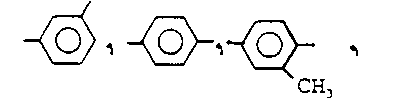 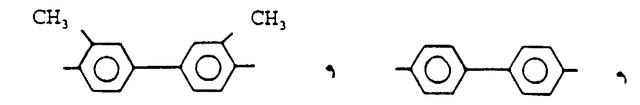 and 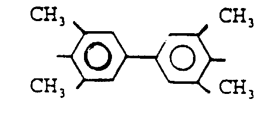 or (B) divalent organic radicals of the general formula: 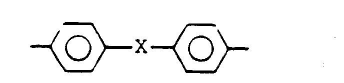 where X is a member selected from the group consisting of divalent radicals of the formulae:

- S -, - O -,

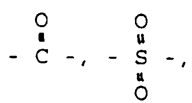

and - C_{y}H_{2y} -, and where y is an integer from 1 to about 12.

In one embodiment, the polyetherimide repeating units may, in addition to the etherimide repeating units described above, further contain polyimide repeating units of the formula: 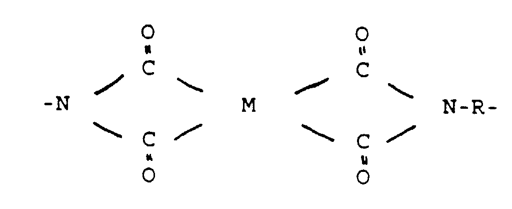 wherein R is a divalent organic radical selected from the group consisting of (a) aromatic hydrocarbon radicals having from 6 to 20 carbon atoms and derivatives thereof, (b) alkylene radicals having from 2 to 20 carbon atoms, cycloalkylene radicals having from 3 to 20 carbon atoms, and (c) divalent radicals of the general formula: 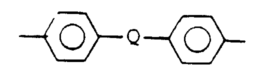 where Q is a member selected from the group consisting of:

- S -,

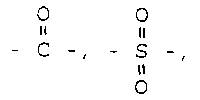

- S -, and - CₓH₂ₓ -, and wherein x is an integer from 1 to 12, and M is selected from the group consisting of: 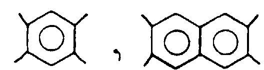 and 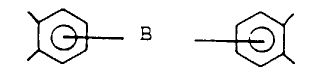 wherein B is -S- or -CO-. Polyetherimides containing such groups are described by Williams et al. in U.S. Pat. No. 3,983,093, incorporated herein by reference.

In general, the reactions can be carried out employing well-known solvents e.g., O-dichlorobenzene, m-cresol/toluene and the like to effect interaction between the bis(ether anhydride) of the above formula and the paraphenylene diamine, at temperatures from 100°C to 250°C. Alternatively, the polyetherimides can be prepared by melt polymerization of aromatic bis(ether anhydride)s and diamines accomplished by heating a mixture of the ingredients at elevated temperatures with concurrent stirring. Generally, melt polymerizations employ temperatures between 200°C and 400°C. Chain stoppers and branching agents may also be employed in the reaction. The polyetherimides and their preparation are described in U.S. Patent No. 3,983,093 (Williams et al), which is incorporated herein by reference.

Bis(ether anhydride)s which may be used for preparing polyetherimides include for example:
1,3-bis(2,3-dicarboxyphenoxy)benzene dianhydride;
1,4-bis(2,3-dicarboxyphenoxy)benzene dianhydride;
1,3-bis(3,4-dicarboxyphenoxy)benzene dianhydride;
1,4-bis(3,4-dicarboxyphenoxy)benzene dianhydride;

A preferred class of aromatic bis(ether anhydride)s includes compounds of formulae (I), (II) and (III), which follow: 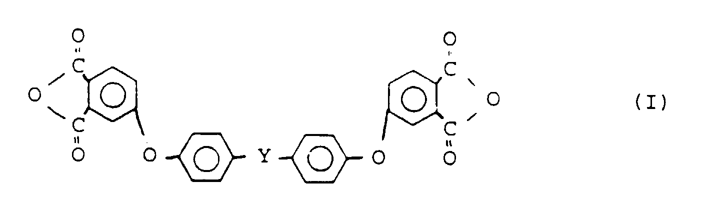 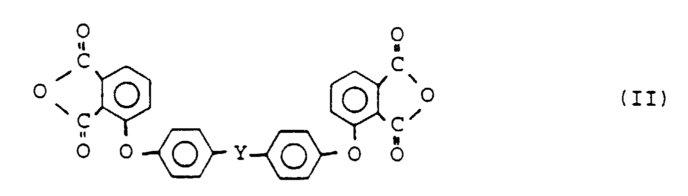 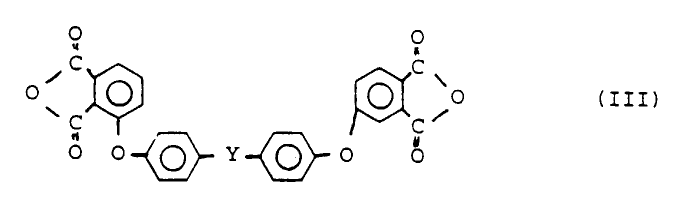 and mixture thereof, where Y is selected from the group consisting of -O-, -S-,-CO-, -C(CH₃)₂- and -SO₂-. Aromatic Bis(ether anhydride)s of formula (I) include for example:
2,2-bis[4-(3,4-dicarboxyphenoxy)phenyl]propane dianhydride;
4,4'-bis(3,4-dicarboxyphenoxy)diphenyl ether dianhydride;
4,4'-bis (3,4-dicarboxyphenoxy) diphenyl sulfide dianhydride;
4,4'-bis(3,4-dicarboxyphenoxy)benzophenone dianhydride;
4,4'-bis(3,4-dicarboxyphenoxy)diphenylsulfone dianhydride; and
mixtures thereof.

Aromatic bis(ether anhydride)s of formula (II) include, for example:
2,2-bis[4-(2,3-dicarboxyphenoxy)phenyl] propane dianhydride;
4,4'-bis(2,3-dicarboxyphenoxy)diphenyl ether dianhydride;
4,4'-bis(2,3-dicarboxyphenoxy)diphenyl sulfide dianhydride;
4,4'-bis (2,3-dicarboxyphenoxy) benzophenone dianhydride;
4,4'-bis(2,3-dicarboxyphenoxy)diphenylsulfone dianhydride; and
mixtures thereof.

Aromatic bis(ether anhydride)s of formula (III) may be, for example:
4-(2,3-dicarboxyphenoxy)-4'-(3,4-dicarboxyphenoxy)diphenyl-2,2-propane dianhydride;
4-(2,3-dicarboxyphenoxy)-4'-(3,4-dicarboxyphenoxy)diphenyl ether dianhydride;
4-(2,3-dicarboxyphenoxy)-4'-(3,4-dicarboxyphenoxy)diphenyl sulfide dianhydride;
4-(2,3-dicarboxyphenoxy)-4'-(3,4-dicarboxyphenoxy)benzophenone dianhydride;
4-(2,3-dicarboxyphenoxy)-4'-(3,4-dicarboxyphenoxy)diphenylsulfone dianhydride; and
mixtures thereof.

In the preferred embodiment of this invention, the polyetherimide is of the type described above wherein the particular organic diamine employed is paraphenylene diamine.

In another embodiment of the invention, the polyetherimide may consist of a blend of the preferred paraphenylene diamine prepared polyetherimide and polyetherimides prepared employing other organic diamines. The blend preferably contains sufficient amounts of the paraphenylene diamine prepared polyetherimide in order to achieve substantially increased impact resistance over other organic diamine prepared polyetherimide resins. The blend should preferably consist of at least 50% by weight of the paraphenylene diamine prepared polyetherimide and particularly at least 75% by weight thereof in the blend of the two polyetherimides.

Such other organic diamines useful in preparing the polyetherimides other than the paraphenylene based polyetherimide are:
4,4'-diaminodiphenyl propane;
m-phenylenediamine;
4,4'-diaminodiphenylmethane (commonly named 4,4'-methylenedianiline);
4,4'-diaminodiphenyl sulfide;
r,r'-diaminodiphenyl sulfone;
4,4'-diaminodiphenyl ether (commonly named 4,4'-oxydianiline);
1,5-diaminonaphthalene;
3,3-dimethylbenzidine;
3,3-dimethoxybenzidine;
2,4-bis(beta-amino-t-butyl)toluene;
bis(p-beta-amino-t-butylphenyl) ether;
bis(p-beta-methyl-o-aminophenyl) benzene;
1,3-diamino-4-isopropylbenzene;
1,2-bis(3-aminopropoxy)ethane;
benzidine;
m-xylylenediamine;
2,4-diaminotoluene;
2,6-diaminotoluene;
bis(4-aminocyclohexyl)methane;
3-methylheptamethylenediamine;
4,4-dimethylheptamethylenediamine;
2,11-dodecandiamine;
2,2-dimethylpropylenediamine;
octamethylenediamine;
3-methoxyhexamethylenediamine;
2,5-dimethylhexamethylenediamine;
2,5-dimethylheptamethylenediamine;
3-methylheptamethylenediamine;
5-methylnonamethylenediamine;
1,4-cyclohexanediamine;
1,12-octadecanediamine;
bis(3-aminopropyl)sulfide;
N-methyl-bis(3-aminopropyl)amine;
hexamethylenediamine;
heptamethylenediamine;
nonamethylenediamine;
decamethylenediamine; and
mixtures of such diamines.

Numerous procedures are useful for preparing the polyetherimide. A presently preferred procedure is described in U.S. Pat. No. 4,417,044, which is incorporated herein by reference.

In the practice of this invention, the impact modifier employed herein is an olefinic copolymer. The olefinic copolymers are copolymers of an α-olefin with a glycidyl ester of α,β-unsaturated acid. The term "α-olefin" as used herein means ethylene, propylene, butene-1, etc. Among them, ethylene is preferred. Typical glycidyl esters of the β-unsaturated acids are compounds of the general formula: 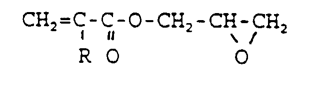 wherein R represents a hydrogen atom or a lower alkyl group.

Examples of the glycidyi ester of α,β-unsaturated acids include glycidyl acrylate, methacrylate and ethacrylate. Among them, glycidly methacrylate is preferred. The amount of the glycidyl ester of the α,β-unsaturated acid in the olefinic copolymer is 0.5 to 40 weight %, preferably 3 to 30 weight %. When this amount is less than 0.5 weight %, no intended effects can be obtained and, on the contrary, when it exceeds 40 weight %, gelation may occur during melt-blending with polyetherimide to damage the extrusion stability, moldability and mechanical properties of the product.

The olefinic copolymer may further be copolymerized with 40 weight % or less of another copolymerizable unsaturated monomer such as vinyl ether, vinyl acetate, vinyl propionate, methyl acrylate, methyl methacrylate, acrylonitrile or styrene.

In the practice of this invention, the amount of olefinic copolymer employed is that amount sufficient to provide increased impact properties without substantially affecting the other properties of the polyetherimide, particularly the thermal properties thereof. Preferably, the composition of this invention comprises in admixture 99 to 50 weight % of the polyetherimide resin and correspondingly 1.0 to 50 weight % of the olefinic copolymer. More particularly, the composition of this invention comprises 95% to 75% by weight of the polyetherimide resin and 5% to 25% by weight of the olefinic copolymer. Even more preferred is a composition of 5% to 15% by weight of the olefinic and 95% to 85% by weight of the polyetherimide resin. The weights of the components of the composition of this invention are based on the total weight of the polyetherimide and the olefinic copolymer.

In addition, other additives may also be included with the composition disclosed herein such as fillers (organic or inorganic), reinforcing agents (organic or inorganic), heat and light stabilizers, pigments, and flame retardants. Also included herein are other polymer additives such as blends of the composition of this invention with other polymers such as polyphenylene sulfide, polycarbonates, and polyester carbonates.

### Examples 1-12

The compositions of these Examples were prepared by blending the polyetherimide resin and olefinic copolymer in a single screw 6.35 cm (2½") extruder at a barrel temperature of 232-260°C (450°-500°F) and an extrusion temperature of 260°C (500°F). The extrudate was pelletized and dried at 66°C (150°F) for 5 hrs. In accordance with ASTM test procedure D256, the pellets were injection molded into test specimens. The test specimens were tested for notched Izod and heat distortion temperature in accordance with ASTM test procedure D256 and ASTM test procedure 648, respectively.

The polyetherimide resins (PEI) employed in the Examples 1-12 are prepared from bisphenol A anhydride and the particular phenylene diamine using a catalyst and chain stopper wherein PEI-1, PEI-2 and PEI-3 are prepared by employing meta-phenylene diamine as the organic diamine. PEI-4 employs the organic diamine of this invention, namely paraphenylene diamine.

The results of the properties tested, i.e. heat distortion temperature °C (HDT°C) and notched Izod, and the compositions of Examples 1-12 are as set forth in Table 1 below. All amounts are percent by weight.

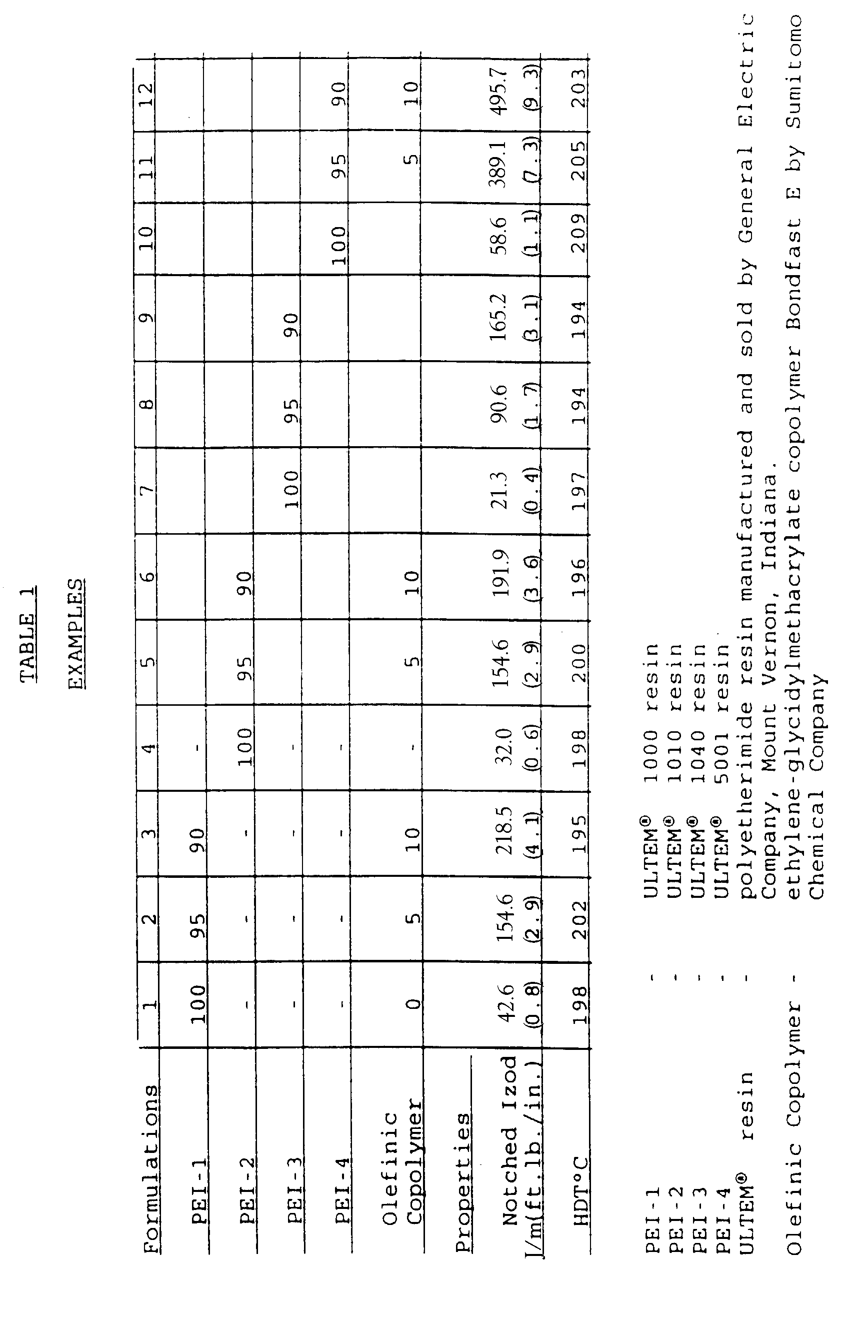

### EXAMPLES 13 and 14

The compositions of these Examples 13 and 14 were prepared under the same conditions as in Example as 1 - 12. However, only ULTEM^{®} 1000 and ULTEM^{®} 5001 polyetherimide resins were employed herein and were blended with 5% by weight of Bondfast E. Test specimens were molded under the same conditions, and the test samples were tested for low temperaure impact characteristics (Notched Izod impact). The results obtained were as reported in Table 2 below.

**TABLE 2**

| | Examples | |
|---|---|---|
| | 13 | 14 |
| PEI-1 | 95 | |
| PEI-4 | | 95 |
| Olefinic Copolymer | 5 | 5 |
| Notched Izod J/m (ft.lbs/in.) | | |
| @ -40°C | 80 (1.5) | 149 (2.8) |
| @ -20°C | 85 (1.6) | 149 (2.8) |
| PEI-1, PEI-4 and Olefinic Copolymer are the same as defined in Table 1. | | |

As can be observed from the results, the compositions of this invention, namely PEI-4, have dramatic improvement in impact strengths both at room temperature and low temperature over that of the other polyetherimides, namely PEI-1, PEI-2 and PEI-3. In addition, as demonstrated by the HDT°C values, the thermal properties of the polyetherimide are essentially not affected by the addition of the impact modifier.

## Claims

1. A composition having improved impact resistance comprising in admixture a polyetherimide resin and an impact improving amount of an α-olefinic copolymer of an olefin with a glycidyl ester of an α,β-unsaturated acid wherein the polyetherimide resin is the reaction product of a bis(ether anhydride) and paraphenylene diamine.

2. The composition of claim 1 wherein the olefinic copolymer is a compound of the general formula: 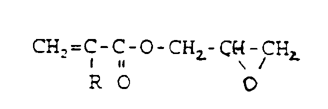 wherein R is selected from the group consisting of hydrogen and a lower alkyl group of 1-12 carbon atoms.

3. The composition of claim 2 wherein the olefinic copolymer is an ethylene-glycidyl methacrylate copolymer.

4. The composition of any preceding claim wherein the polyetherimide resin is a blend of at least 50% by weight of the paraphenylene diamine-bis(ether anhydride) polyetherimide resin and another polyetherimide resin of an organic diamine-bis(ether anhydride) polyetherimide resin wherein the organic diamine is other than paraphenylene diamine.

5. The composition of claim 4 wherein the other organic diamine is a phenylene diamine.

6. The composition of claim 5 wherein the phenylene diamine is metaphenylene diamine.

7. The composition of any preceding claim, wherein the notched izod impact according to ASTM D256 is greater than 266 J/m (5 ft.lbs./in.).

8. The composition of claim 7, wherein the notched izod impact according to ASTM D256 is greater than 400 J/m (7.5 ft.lbs./in.).

9. The composition of claim 8, wherein the notched izod impact according to ASTM D256 is greater than 453 J/m (8.5 ft.lbs./in.).

10. The composition of claim 7, wherein the heat distortion temperature of said composition according to ASTM 648 is greater than 205 °C.

11. The composition of claim 8, wherein the heat distortion temperature of said composition according to ASTM 648 is greater than 200 °C.

## Patentansprüche

1. Zusammensetzung mit verbesserter Schlagzähigkeit aufweisend in Mischung ein Polyetherimidharz und eine die Schlagzähigkeit verbessernde Menge eines α-olefinischen Copolymers aus einem Olefin mit einem Glycidylester einer α, β-ungesättigten Säure, wobei das Polyetherimidharz das Reaktionsprodukt aus einem Bis(etheranhydrid) und Paraphenylendiamin ist.

2. Zusammensetzung nach Anspruch 1, dadurch gekennzeichnet, daß das olefinische Copolymer eine Verbindung der allgemeinen Formel: 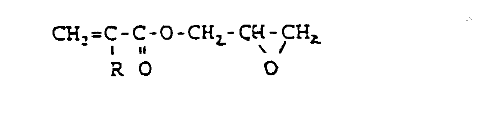 ist, worin R ausgewählt ist aus der Gruppe bestehend aus Wasserstoff und einer Niederalkylgruppe mit 1 - 12 Kohlenstoffatomen.

3. Zusammensetzung nach Anspruch 2, dadurch gekennzeichnet, daß das olefinische Copolymer ein Ethylen-Glycidylmethacrylatcopolymer ist.

4. Zusammensetzung nach einem der vorhergehenden Ansprüche, dadurch gekennzeichnet, daß das Polyetherimidharz ein Blend ist aus wenigstens 50 Gew.-% des Paraphenylendiamin-bis(etheranhydrid)polyetherimidharzes und eines weiteren Polyetherimidharzes aus einem organischen Diamin-bis(etheranyhdrid)polyetherimidharz, worin das organische Diamin ein anderes ist als Paraphenylendiamin.

5. Zusammensetzung nach Anspruch 4, dadurch gekennzeichnet, daß das andere organische Diamin ein Phenylendiamin ist.

6. Zusammensetzung nach Anspruch 5, dadurch gekennzeichnet, daß das Phenylendiamin Methaphenylendiamin ist.

7. Zusammensetzung nach einem der vorhergehenden Ansprüche, dadurch gekennzeichnet, daß die Kerbschlagzähigkeit nach Izod (notched izod impact) gemäß ASTM D256 größer als 266. J/m (5 ft.lbs./in.) ist.

8. Zusammensetzung nach Anspruch 7, dadurch gekennzeichnet, daß die Kerbschlagzähigkeit nach Izod (notched izod impact) gemäß ASTM D256 größer als 400 J/m (7.5 ft.lbs./in.) ist.

9. Zusammensetzung nach Anspruch 8, dadurch gekennzeichnet, daß die Kerbschlagzähigkeit nach Izod (notched izod impact) gemäß ASTM D256 größer als 453 J/m (8.5 ft.lbs./in.) ist.

10. Zusammensetzung nach Anspruch 7, dadurch gekennzeichnet, daß die Formbeständigkeitstemperatur der Zusammensetzung gemäß ASTM 648 größer als 205 °C ist.

11. Zusammensetzung nach Anspruch 8, dadurch gekennzeichnet, daß die Formbeständigkeitstemperatur der Zusammensetzung gemäß ASTM 648 größer als 200 °C ist.

## Revendications

1. Composition présentant une résistance améliorée au choc comprenant, sous forme d'un mélange, une résine polyétherimide et une quantité améliorant la résistance au choc d'un copolymère α-oléfinique d'une oléfine et d'un ester glycidylique d'un acide insaturé en α et β, dans laquelle la résine polyétherimide est le produit réactionnel d'un bis(éther anhydride) et d'une para-phénylènediamine.

2. Composition selon la revendication 1, dans laquelle le copolymère oléfinique est un copolymère d'un composé de formule générale : 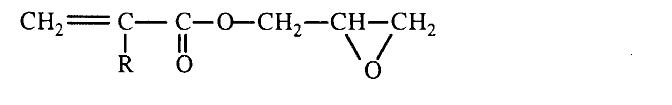 dans laquelle R est choisi dans l'ensemble constitué par un atome d'hydrogène et un groupe alkyle inférieur comportant de 1 à 12 atomes de carbone.

3. Composition selon la revendication 2, dans laquelle le copolymère oléfinique est un copolymère d'éthylène et de méthacrylate de glycidyle.

4. Composition selon l'une quelconque des précédentes revendications, dans laquelle la résine polyétherimide est un mélange d'au moins 50 % en poids d'une résine polyétherimide formée à partir de para-phénylènediamine et d'un bis(éther anhydride), et d'une autre résine polyétherimide de type résine polyétherimide formée à partir d'une diamine organique et d'un bis(éther anhydride) dans laquelle la diamine organique est différente de la para-phénylènediamine.

5. Composition selon la revendication 4, dans laquelle l'autre diamine organique est une phénylènediamine.

6. Composition selon la revendication 5, dans laquelle la phénylènediamine est la méta-phénylènediamine.

7. Composition selon l'une quelconque des précédentes revendications, dans laquelle la résistance au choc Izod sur éprouvette entaillée, selon la norme ASTM D256, est supérieure à 266 J/m (5 pied.livre/pouce).

8. Composition selon la revendication 7, dans laquelle la résistance au choc Izod sur éprouvette entaillée, selon la norme ASTM D256, est supérieure à 400 J/m (7,5 pied.livre/pouce).

9. Composition selon la revendication 8, dans laquelle la résistance au choc Izod sur éprouvette entaillée, selon la norme ASTM D256, est supérieure à 453 J/m (8,5 pied.livre/pouce).

10. Composition selon la revendication 7, dans laquelle la température de fléchissement sous charge de ladite composition, selon la norme ASTM 648, est supérieure à 205 °C.

11. Composition selon la revendication 8, dans laquelle la température de fléchissement sous charge de ladite composition, selon la norme ASTM 648, est supérieure à 200 °C.
